(19) Europäisches Patentamt European Patent Office Office européen des brevets

(11) **EP 1 529 231 B1**

(12) **EUROPEAN PATENT SPECIFICATION**

(45) Date of publication and mention of the grant of the patent:
**19.11.2008 Bulletin 2008/47**

(51) Int Cl.:
*G02B 6/26* (2006.01)   *G02B 6/34* (2006.01)

(21) Application number: **03712343.7**

(22) Date of filing: **13.03.2003**

(86) International application number:
**PCT/GB2003/001071**

(87) International publication number:
**WO 2004/017112 (26.02.2004 Gazette 2004/09)**

(54) **OPTICAL BRANCHING COMPONENT WITH LOW POLARISATION SENSITIVITY**

OPTISCHE VERZWEIGUNGSKOMPONENTE MIT GERINGER POLARISATIONSEMPFINDLICHKEIT

ELEMENT DE DERIVATION OPTIQUE A FAIBLE SENSIBILITE A LA POLARISATION

(84) Designated Contracting States:
**AT BE BG CH CY CZ DE DK EE ES FI FR GB GR HU IE IT LI LU MC NL PT RO SE SI SK TR**

(30) Priority: **16.08.2002 GB 0219141**

(43) Date of publication of application:
**11.05.2005 Bulletin 2005/19**

(73) Proprietor: **Gemfire Europe Limited Livingston EH54 8SF (GB)**

(72) Inventors:
• **BULTHUIS, Hindrick Freerk, Alcatel Optronics UK LT Livingston EH54 8SF (GB)**
• **BEELEN, Gunter 7500 AH Enschede (NL)**
• **VLIET, Frederik Marcel, Van Der Monterey Park, CA 91754 (US)**
• **PANDAVENES, Suarez Jaime, Alcatel Optronics UK Ltd Livingston EH54 8SF (GB)**

(74) Representative: **Mills, Julia et al D Young & Co 120 Holborn London EC1N 2DY (GB)**

(56) References cited:
**EP-A- 0 382 461        EP-A- 0 610 973**

• **PATENT ABSTRACTS OF JAPAN vol. 1996, no. 02, 29 February 1996 (1996-02-29) & JP 07 281041 A (HITACHI CABLE LTD), 27 October 1995 (1995-10-27)**
• **JINGUJI K. ET AL: 'Two-Port Optical Wavelength Circuits Composed of Cascaded Mach-Zehnder Interferometers with Point-Symmetrical Configurations' JOURNAL OF LIGHTWAVE TECHNOLOGY vol. 14, no. 10, October 1996, pages 2301 - 2310**

**Description**

The present invention relates to optical branching devices, in particular optical branching devices provided in planar lightguide circuits (PLCs). More specifically, though not exclusively, the invention concerns an optical branching device having low polarisation dependent loss (PDL) for use as a tap device.

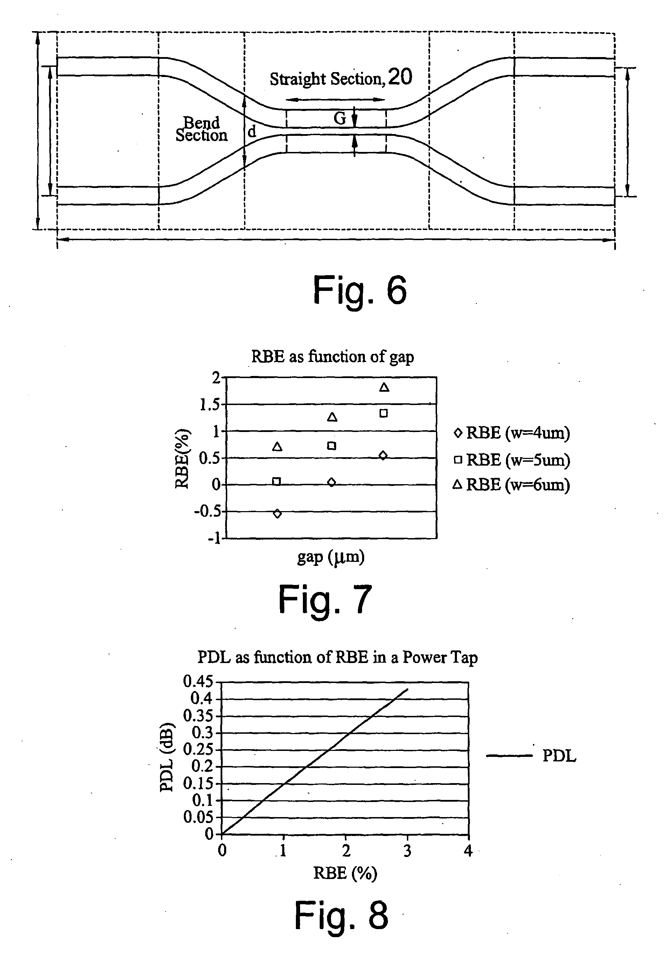

Optical branching components, also known as optical couplers, are well known and used in PLC technology. Different types of optical couplers exist, including directional couplers (such as shown in Fig.6) and Y-branch couplers. Directional couplers tend to have lower power loss than Y-branch couplers, but have higher wavelength dependency i.e. variation in the coupling strength with different input signal wavelengths.

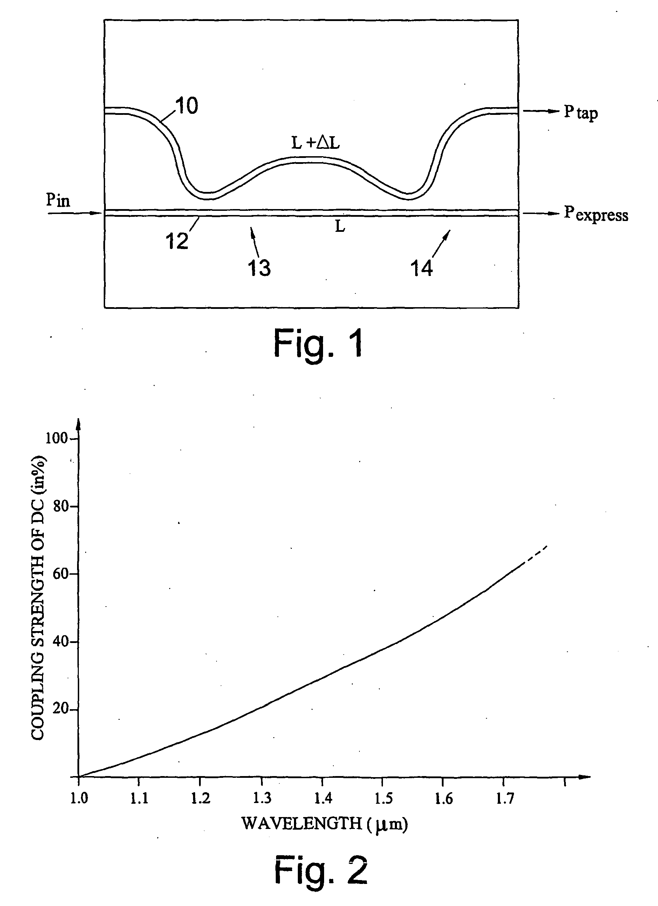

US 5,044,715 describes an improved optical branching component, based on a Mach-Zender interferometer arrangement and which is designed to have low wavelength dependency. Fig.1 illustrates this component which comprises two waveguides which are brought into proximity with each other in two regions so as to form two directional couplers, there being an effective optical path length difference between the two waveguides where they extend between the two directional couplers. This effective optical path length difference is arranged to be less than the shortest operating wavelength of the branching component, and the directional couplers are each designed so that the coupling strength, C (where $C = \sin^2\varphi$, as described hereinbelow), of each directional coupler monotonically increases with increasing wavelength in the operational wavelength region of the component, as illustrated in the graph in Fig.2. Such a design is proposed to have low wavelength dependency and is sometimes referred to as a Wavelength Insensitive Coupler or WINC.

A desired application of a branching device like that described in US 5,044,715 is as an optical tap, to tap off a desired portion of the power in an optical signal input to the branching device. One disadvantage of using such a component as a tap is that the coupling strength of the individual directional couplers needs to be quite small for small tap ratios (where the tap ratio = $P_{tap}/(P_{tap}+P_{express})$, where $P_{tap}$ is the output power in the tap path, and $P_{exp}$ the output power in the express path). A big disadvantage of small coupling strengths is that a parameter which we refer to as the Relative Birefringence Error (RBE) becomes large, in particular where the PLC chip is fabricated in silica-on-silicon technology (which is a common technology platform for PLCs). A large RBE gives a large polarization dependence in the split ratio (where the "split ratio, $P_{split}$" of an individual coupler is defined as $P_{split} = P_1/(P_1 + P_2)$ where $P_1$ and $P_2$ are the power in the two output arms of the coupler respectively). When two couplers are combined in a Mach-Zender configuration this manifests itself as a high polarisation dependent deviation ($>\pm0.2\%$) in the tap ratio. This polarization dependence in the tap ratio we shall refer to as the Polarization Dependent Loss or PDL of the tap channel, but it will be understood that strictly speaking the total power in the component is conserved, it is simply that the power in the tap channel is polarisation dependent.

This can cause significant problems for systems designers who wish to design such tap components into their systems. Component designers are continually trying to improve the performance specifications of PLC components, especially PULL in such components.

It is an aim of the present invention to avoid or minimize one or more of the foregoing disadvantages.

US-A-5 165 001 discloses a guided-wave optical branching device which uses non-symmetric couplers to shape the wavelength response.

According to the invention there is provided an optical branching component comprising two optical waveguides which are in proximity with one another in at least two regions so as to form adjacent directional couplers, said two adjacent directional couplers being symmetrical couplers wherein between said two directional couplers there is an effective optical path length difference between the two waveguides, and wherein the coupling strength of each of said two directional couplers = $\sin^2\varnothing$ and monotonically decreases with increasing wavelength in the 152onm - 1640nm operational wavelength region, where ø is phase thickness; and

Wherein said effective optical path length difference is less than the shortest operating wavelength of the component.

An advantage of the inventive component, especially where the branching component is to be used as a tap, is that couplers with larger coupling strength can be used in the inventive component than in the WINC component of US 5,044,715, for a given tap ratio. These larger coupling strength couplers can be fabricated in silica-on-silicon technology to have a lower RBE than the prior art WINC, as will be later described, which in turn enables lower PDL to be achieved.

The coupling strength of each DC is preferably chosen sc that a desired minimum PDL is achieved for each DC. The effective optical path length difference between the DCs may then also be optimised by the component designer, if desired, so as to minimise any wavelength sensitivity of the device in a given operational wavelength window of the device. For example, the effective optical path length difference, at a given operating wavelength (e.g. the lowest operating wavelength, or the central operating wavelength), may be chosen so that the wavelength sensitivity of the DCs is substantially offset by the wavelength sensitivity of the optical path length difference, over the operating wavelength window of the device.

Further inventive features of the invention are set out in the claims dependent from claim 1.

Preferred embodiments of the invention will now be described by way of example only and with reference to the accompanying drawings in which:

Fig.1 is a schematic plan view of a prior art WINC component, on a PLC;

Fig.2 is a graph illustrating the variation in the coupling strength of each directional coupler in the prior art WINC component of Fig.1, with variation in wavelength;

Fig.3 is a schematic plan view of an optical branching component according to the present invention;

Fig.4 is a perspective view of a portion of a waveguide in the component of Fig.3;

Fig.5 is a graph illustrating the variation in the coupling strength of each directional coupler in the inventive component of Fig.3;

Fig.6 is a plan schematic view of a directional coupler device;

Fig.7 shows three graphs plotting the RBE as a function of Gap, G, between the two waveguides of the straight section of each directional coupler in a Power Tap device of the Mach-Zender interferometer type shown in Figs 1 and 3, for three different waveguide core widths, based on modal and stress calculations;

Fig.8 is a graph plotting the PDL as a function of the RBE in a Power Tap device of the Mach-Zender interferometer type;

Fig.9 is a graph illustrating the variation in PDL with wavelength, for one embodiment of a PINC component according to the invention;

Fig.10 is a graph illustrating the variation in PDL with wavelength, for a prior art type WINC component like that of Figs.1 and 2;

Fig.11 is a graph illustrating the variation in the tap ratio with input signal wavelength, for the same PINC component as the Fig.9 graph; and

Fig.12 is a schematic plan view of a switching element according to another embodiment of the invention.

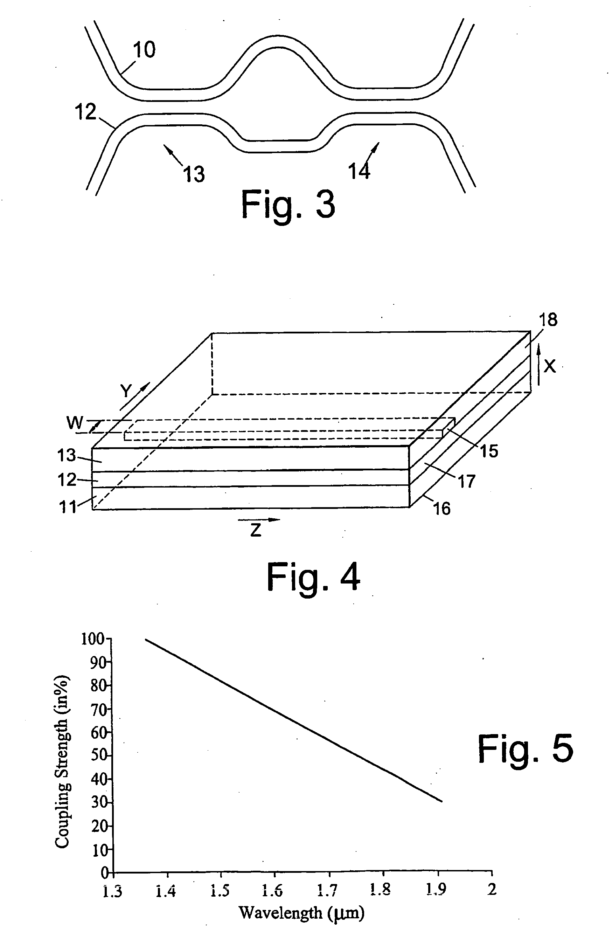

Fig.3 illustrates an optical branching component (or "optical coupler") according to the invention. In physical appearance, the component looks similar to the prior art WINC device of Fig.1, namely comprising two waveguides 10,12 which are brought into proximity with each other in two regions 13,14 so as to form two directional couplers (DCs). In the embodiment of Fig.3 the two waveguides have the same geometrical structure (i.e. dimensions of the core) and are made of identical materials. Like in the WINC device of Fig.1, there is an effective optical path length difference, $n\Delta L$, between the two waveguides where they extend between the two directional couplers, where $\Delta L$ is the physical length difference between the two waveguides and n is the (effective) refractive index of each waveguide. However, in contrast to the WINC device of Fig.1, in the device according to the present invention the DCs are designed so that the (power) coupling strength of each of the two DCs decreases monotonically with increasing wavelength, in the operating wavelength region of the device, as illustrated in Fig.5 and as will be later explained in detail.

The optical waveguides are silica-based waveguides formed on a silicon substrate using silica-on-silicon technology. Fig. 4 shows a portion (along the length) of such a waveguide comprising a core 15 etched from a core layer of silica-based material deposited on a silicon substrate 16 using Flame Hydrolysis Deposition. An undercladding layer 17 is commonly provided on the silicon substrate, prior to deposition of the core layer, and may be in the from of an oxide layer or a layer of silica-based material. An upper cladding layer 18 covers and embeds the waveguide core and is formed using Flame Hydrolysis Deposition. In the preferred embodiment the core 15 is square in cross-section, having a core width, w (in the x and y-directions in Fig.4)

It can be shown that a quantity which we refer to as Relative Birefringence Error (RBE) heavily influences the performance of an optical coupler based on a Mach-Zender interferometer arrangement incorporating two directional couplers, like the devices illustrated in Figs. 1 and 3. The RBE can be used as a convenient indicator of the Polarisation Dependent Loss (PDL) of a component and we define the RBE as follows.

**Definition of RBE**

The performance of a directional coupler (DC) is determined by the overall phase thickness of the coupler. In the case of a symmetrical coupler comprising a continuously varying waveguide structure (in terms of the gap between the two waveguides, and core width of the waveguides), for example the DC shown in Fig.6, this phase thickness can be defined as half the phase shift between the fundamental and the first order modes in the coupler. This can also be expressed mathematically as:

$$\varphi = \int_{-L/2}^{L/2} |\kappa(G(z))| \cdot dz \quad \text{with} \quad |\kappa| = k_0 \frac{n_0(k_0) - n_1(k_0)}{2} .$$

where

$\kappa$ is the coupling coefficient at location z in the coupler (as defined in "Optical Integrated Circuits" edited by Nishihara et al., page 42, and on page 60-61, edited by Donelley & Sons company);

$k_0 = 2\pi/\lambda$ is the wave-number in vacuum;

L is the length over which coupling contributes to the overall phase-thickness of the coupler ;

$n_0$ is the refractive index of the fundamental mode (of the optical signal beam field );

$n_1$ is the refractive index of the first order mode (of the optical signal beam field); and

G(z) is a function defining the width of the gap between the waveguides, as a function of z.

So if the polarization dependence of $n_0 - n_1$ is known as a function of the gap and the core width, then the polarization dependence of the phase thickness can be determined from the following:

$$\Delta|\kappa| = |\kappa|_{TM} - |\kappa|_{TE} = \frac{k_0}{2} \cdot \left( n_0^{TM} - n_0^{TE} - \left( n_1^{TM} - n_1^{TE} \right) \right)$$

$$= \frac{k_0}{2} \cdot \left( n_0^{TM,geo} + \Delta n_0^{TM,\sigma} - n_0^{TE,geo} + \Delta n_0^{TE,\sigma} - \left( n_1^{TM,geo} + \Delta n_1^{TM,\sigma} - n_1^{TE,geo} + \Delta n_1^{TE,\sigma} \right) \right)$$

$$= \frac{k_0}{2} \cdot \left( B_0^{geo} + B_0^{\sigma} - \left( B_1^{geo} + B_1^{\sigma} \right) \right)$$

where

$\Delta|\kappa|$ is the difference between the magnitude of the coupling coefficient for the TM polarisation ( $|\kappa|_{TM}$ ) and the magnitude of the coupling coefficient for the TE polarisation ( $|\kappa|_{TE}$ ) ; and

$B_i^{geo} = n_i^{TM,0} - n_i^{TE,0}$ , , which is the birefringence of the ith mode due to the geometrical structure (i.e. the dimensions) of the waveguides, and

$B_i^{\sigma} = \Delta n_i^{TM,\sigma} - \Delta n_i^{TE,\sigma}$ , which is the birefringence of the ith mode due to stresses in the waveguides.

Assuming the polarization dependent effect to be small compared to the difference in propagation constant [i.e. $k_0$] of the fundamental and first order mode, a convenient relative quantity can de defined as:

$$RBE = \frac{\frac{k_0}{2} \cdot \left( B_0^{geo} + B_0^{\sigma} - \left( B_1^{geo} + B_1^{\sigma} \right) \right)}{\frac{k_0}{2} \cdot \left( n_0^{TE}(k_0) - n_1^{TE}(k_0) \right)} = \frac{\left( B_0^{geo} + B_0^{\sigma} - \left( B_1^{geo} + B_1^{\sigma} \right) \right)}{\left( n_0^{TE} - n_1^{TE} \right)} \approx \frac{\left( B_0^{geo} + B_0^{\sigma} - \left( B_1^{geo} + B_1^{\sigma} \right) \right)}{\left( n_0^{TM} - n_1^{TM} \right)}$$

Using this definition we obtain an integrated measure of the polarization dependence of the phase-thickness of the coupler:

$$\frac{\Delta\varphi}{\varphi} = \frac{\int_{-\infty}^{\infty} \frac{|\Delta\kappa(G(z))|}{|\kappa(G(z))|} \cdot |\kappa(G(z))| \cdot dz}{\int_{-\infty}^{\infty} |\kappa(G(z))| \cdot dz} = \frac{\int_{-\infty}^{\infty} RBE(G(z)) \cdot |\kappa(G(z))| \cdot dz}{\int_{-\infty}^{\infty} |\kappa(G(z))| \cdot dz}$$

where

$\Delta\varphi$ is the difference in phase thickness of the directional coupler, for the two different polarisation modes TM, TE

In fact $\Delta\varphi$ will also vary depending on whether the waveguide: in the directional coupler are straight or are bent. As shown in Fig.6, typically the waveguides in a DC bend away from one either on either side of a middle portion 20 of the DC in which the two waveguides are straight and parallel. The waveguides will remain optically coupled in the bent region as they diverge away from one another until they diverge beyond a certain distance apart, d, at which they will no longer be optically coupled. In the bent sections of the coupler, the gap, G(z), is given by the following equation:

$$G(z) = g_0 - 2R\left(\sqrt{1 - (z/R)^2} - 1\right), \text{ where R = bend radius}$$

Other Important Definitions include:

Coupling length $L_C$

$$L_c = \frac{\pi}{2} \cdot \frac{1}{\kappa(g_0, w_0)}$$

Phase thickness due to the bend sections

$$\varphi_{Bend} = 2 \cdot \int_0^R \kappa(G(z), w_0) \cdot dz$$

Coupling length, $L_B$, of bend section

$$L_B = \frac{\varphi_{bend}}{\pi/2} \cdot L_c$$

Fig.7 is a graph illustrating the variation in the RBE with the Gap, G, between the two waveguides, for a DC of a Power Tap device of the Mach-Zender interferometer type, in the straight section, $L_S$, of the coupler. Three graphs are shown for three different waveguide core widths, w = 4,5,6 $\mu$m, respectively. These graphs are all based on mode and stress computer simulations. From this it can clearly be seen that the larger the gap, the larger the RBE becomes, and therefore the higher the PDL. This is the case for all three core widths, w. The RBE is also higher, the greater the core width. Our goal is to achieve as low a value of RBE as possible in each DC. We further propose that in fact it is possible to use the different RBE values for the straight and bend sections of each DC to compensate one another, where the RBE in the straight section (RBE$_s$) and the total RBE from the bend sections (RBE$_b$) are of opposite sign. For example, we ma achieve a total RBE$_T$ of zero for the DC where:

$$RBE_T = RBE_s + RBE_b = 0.$$

Fig.8 Shows a graph illustrating the linear relationship between PDL and RBE in a Power Tap of the Mach-Zender interferometer type, where it has been assumed for simplicity that the two DCs have identical RBE. The slope of the graph will depend on the tap ratio and the choice of other device parameters. This graph is again based on mode and stress computer simulations. It can clearly be seen that the PDL increases linearly with increasing RBE.

In the WINC coupler described in US5,044,715 it is the case that in order to achieve a low tap ratio, say only a few percent or less, it is necessary to use directional couplers (DCs) with very small coupling strength. This is due to the requirement (for the WINC) that the coupling strength of the DCs must increase monotonically with increasing wavelength. The big disadvantage of DCs having small coupling strengths is that the RBE of such couplers becomes large. Particularly where the waveguides are fabricated in low index contrast technology, such as silica-on-silicon waveguides, the PDL of such WINCs will be large, typically 0.5dB or higher depending on the gap size. This is largely because to achieve the necessary "monotonically increasing" condition (to give the proposed wavelength insensitivity) the gap, G, between the waveguides in each DC has to be relatively large, typically greater than $3\mu$m), and so does the width of the waveguide cores, typically a width above the maximum width for a monomode waveguide. As shown above, greater gap sizes, G, and/or greater core width, w, gives larger RBE.

In contrast, in the optical branching device of the present invention, illustrated in Fig.3, each DC has a coupling strength which decreases monotonically with increasing wavelength, in the operating wavelength region of the device. The advantage of this is that even where a small tap ratio is desired (say a few percent or less), the coupling strength of the DCs will be larger than in the WINC device. This means that we can design our DCs to have a smaller gap,G, between the waveguides and/or a smaller waveguide core width, w. Decreasing the gap size and/or the core width increases the coupling strength of the couplers, but as a higher coupling strength is tolerable in our couplers (to achieve a given low tap ratio) this is acceptable. As above-explained, lower gap width G and/or lower waveguide core width, w, will give lower RBE, and hence lower PDL.

The way in which we design the DCs to have a coupling strength which decreases monotonically with wavelength will now be described. The term "coupling strength" with respect to a directional coupler will herein be understood to mean the power coupling strength, C, of the DC, where C is defined as:

$C = \sin^2\varphi$, where $\varphi$ is the phase thickness of the DC, as already defined above.

In fact, the branching devices of Figs.1 and 3 are defined by three parameters:

The phase delay, $2\theta$, between the (two waveguides between the) two DCs;
The phase thickness, $\varphi_1$, of the first coupler;
The phase thickness, $\varphi_2$, of the second coupler.
The phase delay is related to the effective optical path length difference, n$\Delta$L, between the two DCs, by the following equation:

$$2\theta = 2\pi .n\Delta L /\lambda$$

By choosing an appropriate value of $\theta$ it is possible to try to compensate the wavelength dependence of each DC by the wavelength dependence of the phased delay $2\theta$. This can be best explained by looking at the situation where two identical DCs of phase-thickness $\varphi$ are used. The power coupling strength C$_T$ of the entire Mach-Zender interferometer type branching component is given by:

$$C_T = \sin^2(2\varphi) . (1 + \cos 2\theta)/2 ,$$

where two identical DCs are used in the device.

With the required conditions on the WINC device of Fig.1, that the coupling strength of each DC increases monotonically with increasing wavelength, this sets the possible ranges of values for $\varphi$ (e.g. $0 < \varphi < 90°$, or $180° < \varphi < 270°$). The value of $\theta$ can then be optimised so that the wavelength dependence of the $\sin^2(2\varphi)$ term is cancelled by the wavelength dependence of the $(1 + \cos 2\theta)/2$ term, so that the total coupling strength, $C_T$, of the WINC device is wavelength insensitive. For example, where $0 < \varphi < 45°$ the $\sin^2(2\varphi)$ term is increasing with increasing wavelength, so one needs to have $90° < \varphi < 180°$ so that the $(1 + \cos 2\theta)/2$ term decreases with wavelength. US 5, 044,715 proposes that $\theta$ is set close to, but slightly under, 180° at the shortest operating wavelength of the device.

The two DCs need not be identical, they may each have a different phase thickness $\varphi_1$ , $\varphi_2$ in which case the total coupling strength, $C_T$, of the WINC is given by:

$$C_T = \sin^2(\varphi_1 + \varphi_2) \cdot (1 + \cos 2\theta)/2 + \sin^2(\varphi_1 - \varphi_2) \cdot (1 - \cos 2\theta)/2$$

In one embodiment of a branching device according to the present invention, we set the phase thickness of each DC so that:

$$90° \leq \varphi_1 \leq 180°$$

$$90° \leq \varphi_2 \leq 180°$$

In this case, the coupling strength, $C = \sin^2\varphi$, of each DC decreases monotonically with increasing wavelength in the operating wavelength region of the component, as illustrated in Fig.5. With these values of ($\varphi_1$ and $\varphi_2$ , we have found that the RBE becomes small, namely less than 1%, possibly close to zero, for both the bend and straight sections of the DCs, especially if the gap, G, between the DC waveguides is reduced to about $1\mu$m, and the waveguide width, w, of the D waveguide cores is reduced to about $4\mu$m. The small RBE means that the PDL will be low. In order to minimise any wavelength sensitivity, the value of $\theta$ is then also chosen so that again the wavelength sensitivity of the DCs is substantially compensated for by the wavelength sensitivity of the optical path length difference, by using the appropriate above equation defining the total coupling strength $C_T$ of the overall branching device (depending on whether both DCs have identical phase thickness, or not). For example, where both DCs have the same phase thickness, and this phase thickness $\varphi$ is between 90° and 135°, we would make $90° < \theta < 180°$, whereby again the increase with wavelength of the $\sin^2(2\varphi)$ term is substantially compensated for by the decrease with wavelength of the $(1 + \cos 2\theta)/2$ term. However, where the phase thickness $\varphi$ is between 135° and 180° we would want to make $0° < \theta < 90°$, whereby the decrease with wavelength of the $\sin^2(2\varphi)$ term is substantially compensated for by the increas with wavelength of the $(1 + \cos 2\theta)/2$ term.

In a preferred embodiment of the present invention we have used the following values:

$$\theta = 93.9°$$

$$\varphi_1 = 113.8°$$

$$\varphi_2 = 102.5°$$

This has been found to give 0.14% RBE in the straight waveguide section of each DC, and -0.51% RBE in the bent sections.

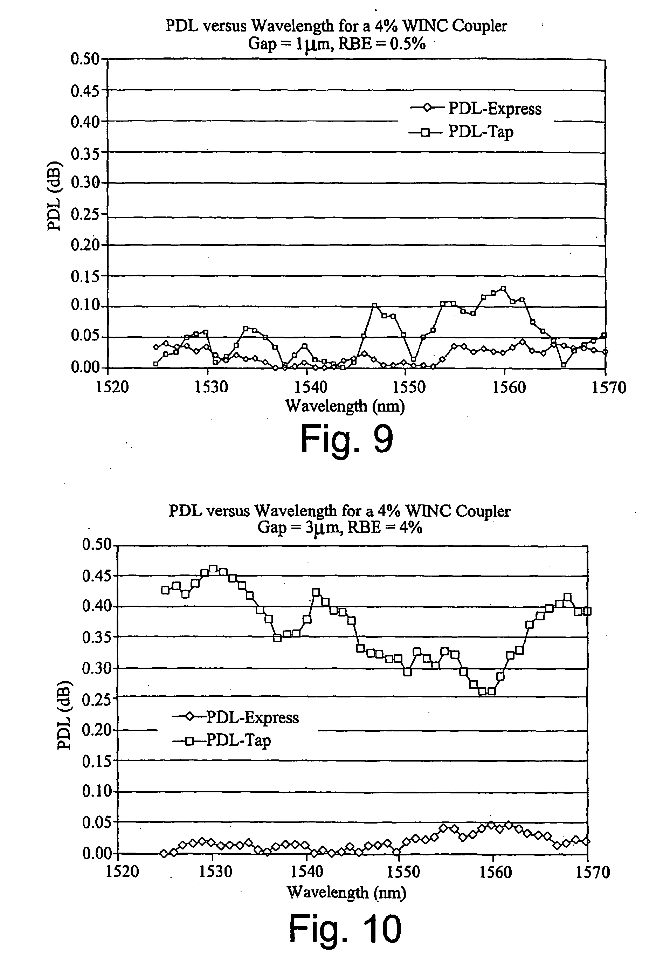

Fig. 9 is a graph of PDL vs. wavelength, in the wavelength region between about 1520nm and 1570nm, for a PINC device according to the invention, designed as a 4% power tap with a gap between the waveguides of $1\mu$m in the straight section 20 of each DC, and a RBE of 0.5% in each DC of the PINC. The lower line shows the PDL for the express signal path through the PINC, and the upper line is for the Tap path. These graphs were obtained from empirical (i.e. experimental) data. It can be clearly seen that the PDL values are very low, the highest PDL values being in the Tap path but always less than 0.15dB. Fig.10 is a similar graph, again obtained from empirical data, this time plotted for the express and tap paths in a prior art WINC device also designed as a 4% tap, with a gap of 3µm between the waveguides in the straight section of each DC of the WINC, and an RBE of 4% for each DC. In this case it can be seen that the PDL values in the Tap path are much higher than in the PINC device, never being less than 0.25dB and sometimes being greater than 0.45dB, giving a variation of about 0.2dB between the minimum and maximum PDL values.

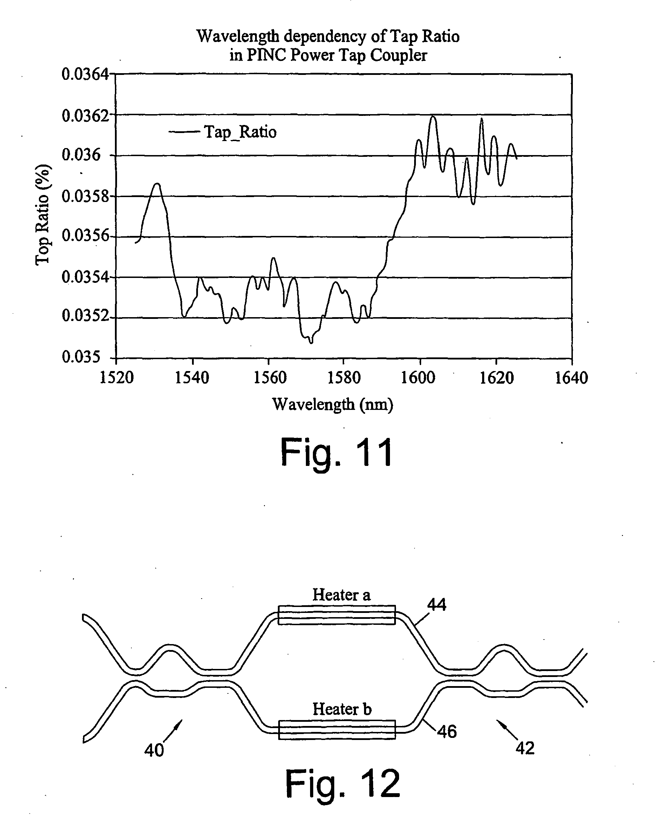

Fig.11 illustrates the wavelength dependency of a PINC device according to one embodiment of the invention. It shows the variation in the Tap ratio of the PINC as a function of wavelength. This graph is again for a (approx.) 4% tap, gap of 1µm, and RBE of 0.5%, same as for graph of Fig.9. The tap ratio over the wavelength range 1520nm to 1640 nm is 3.57% ± 0.05% which is relatively low variation. Thus it can be readily seen from Figs.9 and 11 that the PINC component has very low polarisation dependent loss (PDL) in addition to having a tap ratio which is relatively wavelength insensitive in at least the 1520nm to 1640nm region, which is the desired operating wavelength region of our component.

Various modifications and variations to the above-described embodiments are possible without departing from the scope of the claimed invention. For example, variations in the waveguide dimensions and materials are possible, though may not give as good performance results in terms of the wavelength dependent loss (WDL) and PDL. Moreover, the waveguides need not be made using only FHD and etching technology - other process technologies could be used, for example Chemical Vapour Deposition (CVD).

In other possible embodiments, one or more further waveguides may be incorporated into the device and arranged so that each directional coupler comprises three waveguides located in proximity to one another, in known fashion.

Alternatively, or additionally, one or more heater elements may be provided on the device, for varying the path length (in response to electrical signal(s) being applied to the heater(s)) of one or more of the waveguides so as to actively control the signal output(s) from the branching component, in known fashion. For example, the use of such heaters can enable the branching component to be used to perform switching operations. Fig. 12 shows one embodiment of a switching device incorporating two PINCs 40,42 according to the invention, separated by two delay paths 44,46 formed by the two waveguides of the device respectively, and with a heater a,b provided on each delay path.

## Claims

1. An optical branching component comprising two optical waveguides which are in proximity with one another in at least two regions so as to form two adjacent directional couplers, said
   two adjacent directional couplers being symmetrical couplers wherein between said directional couplers there is an effective optical path length difference between the two waveguides, and wherein the coupling strength of each of said two directional couplers = $\sin^2 ø$ and monotonically decreases with increasing wavelength in the 1520nm - 1640nm operational wavelength region, where ø is phase thickness; and
   Wherein said effective optical path length difference is less than the shortest operating wavelength of the component.

2. An optical branching component according to claim 1, wherein each of said two directional couplers has the same coupling strength.

3. An optical branching component according to claim 1, wherein each of said two directional couplers has a different coupling strength.

4. An optical branching component according to any preceding claim, wherein the smallest gap between the two waveguides in each of said two directional couplers is less than 3µm.

5. An optical branching component according to claim 4, wherein the smallest gap between the two waveguides in each of said two directional couplers is approximately 1µm.

6. An optical branching component according to claim 5, wherein the width of the core of each waveguide is approximately 4µm in a straight section of each of said two directional couplers.

7. An optical branching component according to any preceding claim, wherein the phase thickness of each of said two directional couplers is between 90° and 180°.

8. An optical branching component according to claim 2, wherein the phase thickness of each of said two directional couplers is between 90° and 135° and the phase delay, 2θ, between the two waveguides, between said two directional couplers, is defined by 90° < θ < 180°.

9. An optical branching component according to claim 2, wherein the phase thickness of each of said two directional couplers is between 135° and 180 ° and the phase delay, 2θ, between the two waveguides, between said two directional couplers, is defined by 0° < θ < 90°.

10. An optical branching component according to any preceding claim, wherein the magnitude of the RBE of each of said two directional couplers is less than 1%.

11. An optical branching component according to any preceding claim, wherein the magnitude of the RBE of each of said two directional couplers is no greater than 0.5%.

12. An optical branching component according to any preceding claim, wherein the component is a tap device having a tap ratio of no greater than 4%.

13. An optical branching component according to any preceding claim, wherein the component is a tap device in which the variation in the tap ratio with wavelength is less than 0.1% over the operating wavelength region of the component.

14. An optical branching component according to claim 1, further including at least one further waveguide.

15. An optical branching component according to claim 1, further including heater means disposed on at least one said waveguide.

16. an optical branching component according to any of claims 1 to 15, wherein the waveguides are fabricated in silica-on-silicon technology.

17. An optical switching device comprising two optical branching components according to any of claims 1 to 14, further including at least one heater means.

18. An optical switching device according to claim 17, wherein the waveguides are fabricated in silica-on-silicon technology.

**Patentansprüche**

1. Optische Verzweigungskomponente, die zwei optische Wellenleiter beinhaltet, die in wenigstens zwei Regionen bzw. Bereichen nahe beieinander liegen, um zueinander benachbarte direktionale Koppler zu bilden, wobei die zueinander benachbarten direktionalen Koppler symmetrische Koppler sind, wobei es zwischen den direktionalen Kopplern eine effektive optische Pfadlängendifferenz zwischen den beiden Wellenleitern gibt und wobei die Kopplungsstärke jedes der direktionalen Koppler = $\sin^2 ø$ ist und mit zunehmender Wellenlänge im Betriebswellenlängenbereich von 1520 nm - 1640 nm gleichförmig abnimmt, wobei ø die Phasendicke (phase thickness) ist, und wobei die effektive optische Pfadlängendifferenz kleiner ist als die kürzeste Betriebswellenlänge der Komponente.

2. Optische Verzweigungskomponente nach Anspruch 1, wobei jeder der beiden direktionalen Koppler die gleiche Kopplungsstärke hat.

3. Optische Verzweigungskomponente nach Anspruch 1, wobei jeder der beiden direktionalen Koppler eine unterschiedliche Kopplungsstärke hat.

4. Optische Verzweigungskomponente nach einem der vorangegangenen Ansprüche, wobei die kleinste Lücke zwischen den beiden Wellenleitern in jedem der beiden direktionalen Koppler kleiner als 3 μm ist.

5. Optische Verzweigungskomponente nach Anspruch 4, wobei die kleinste Lücke zwischen den beiden Wellenleitern in jedem der beiden direktionalen Koppler ungefähr 1 μm beträgt.

6. Optische Verzweigungskomponente nach Anspruch 5, wobei die Breite des Kerns jedes Wellenleiters in einem geraden Abschnitt jedes der beiden direktionalen Koppler ungefähr 4 μm beträgt.

7. Optische Verzweigungskomponente nach einem der vorangegangenen Ansprüche, wobei die Phasendicke jedes der beiden direktionalen Koppler zwischen 90° und 180° beträgt.

8. Optische Verzweigungskomponente nach Anspruch 2, wobei die Phasendicke jedes der beiden direktionalen Koppler zwischen 90° und 135° beträgt und die Phasenverzögerung 2θ zwischen den beiden Wellenleitern zwischen den beiden direktionalen Kopplern durch 90° < θ < 180° definiert wird.

9. Optische Verzweigungskomponente nach Anspruch 2, wobei die Phasendicke jedes der beiden direktionalen Koppler zwischen 135° und 180° beträgt und die Phasenverzögerung 2θ zwischen den beiden Wellenleitern zwischen den beiden direktionalen Kopplern durch 0° < θ < 90° definiert wird.

10. Optische Verzweigungskomponente nach einem der vorangegangenen Ansprüche, wobei die Größe des RBE jedes der beiden direktionalen Koppler weniger als 1% beträgt.

11. Optische Verzweigungskomponente nach einem der vorangegangenen Ansprüche, wobei die Größe des RBE jedes der beiden direktionalen Koppler nicht größer als 0,5% ist.

12. Optische Verzweigungskomponente nach einem der vorangegangenen Ansprüche, wobei die Komponente eine Abgriffvorrichtung mit einem Abgriffverhältnis von nicht größer als 4% ist.

13. Optische Verzweigungskomponente nach einem der vorangegangenen Ansprüche, wobei die Komponente eine Abgriffvorrichtung ist, wobei die Variation in dem Abgriffverhältnis mit der Wellenlänge über den Betriebswellenlängenbereich der Komponente weniger als 0,1% beträgt.

14. Optische Verzweigungskomponente nach Anspruch 1, welche weiterhin wenigstens einen weiteren Wellenleiter beinhaltet.

15. Optische Verzweigungskomponente nach Anspruch 1, welche weiterhin eine Heizeinrichtung beinhaltet, die auf wenigstens einem der Wellenleiter angeordnet ist.

16. Optische Verzweigungskomponente nach einem der Ansprüche 1 bis 15, wobei die Wellenleiter in Silica-auf-Silicium-Technik hergestellt sind.

17. Optische Schaltvorrichtung, welche zwei optische Verzweigungskomponenten nach einem der Ansprüche 1 bis 14 beinhaltet und weiterhin wenigstens eine Heizeinrichtung beinhaltet.

18. Optische Schaltvorrichtung nach Anspruch 17, wobei die Wellenleiter in Silica-auf-Silicium-Technik hergestellt sind.

**Revendications**

1. Composant de dérivation optique comprenant deux guides d'ondes optiques qui sont à proximité l'un de l'autre dans au moins deux régions afin de former des coupleurs directionnels adjacents, lesdits coupleurs directionnels adjacents étant des coupleurs symétriques, dans lequel, il existe entre lesdits coupleurs directionnels, une différence de longueur de chemin optique effective entre les deux guides d'ondes, et dans lequel l'intensité de couplage de chacun desdits coupleurs directionnels est égale à $\sin^2\phi$ et décroît de façon monotone lorsque la longueur d'onde croît dans la région de longueurs d'onde de fonctionnement de 1520 nm-1640 nm, où $\phi$ est l'épaisseur de phase ; et dans lequel ladite différence de longueur de chemin optique effective est inférieure à la longueur d'onde de fonctionnement la plus courte du composant.

2. Composant de dérivation optique selon la revendication 1, dans lequel lesdits deux coupleurs directionnels ont chacun la même intensité de couplage.

3. Composant de dérivation optique selon la revendication 1, dans lequel lesdits deux coupleurs directionnels ont chacun une intensité de couplage différente.

4. Composant de dérivation optique selon l'une quelconque des revendications précédentes, dans lequel l'interstice le plus petit entre les deux guides d'ondes dans chacun desdits deux coupleurs directionnels est inférieur à 3 μm.

5. Composant de dérivation optique selon la revendication 4, dans lequel le plus petit interstice entre les deux guides d'ondes dans chacun desdits deux coupleurs directionnels est d'environ 1 μm.

**EP 1 529 231 B1**

**6.** Composant de dérivation optique selon la revendication 5, dans lequel la largeur du coeur de chaque guide d'ondes est d'environ 4 μm dans une section droite de chacun desdits deux coupleurs directionnels.

**7.** Composant de dérivation optique selon l'une quelconque des revendications précédentes, dans lequel l'épaisseur de phase de chacun desdits deux coupleurs directionnels est comprise entre 90° et 180°.

**8.** Composant de dérivation optique selon la revendication 2, dans lequel l'épaisseur de phase de chacun desdits deux coupleurs directionnels est comprise entre 90° et 135° et dans lequel le retard de phase, 2θ, entre les deux guides d'ondes et entre lesdits deux coupleurs directionnels est défini par 90° < θ < 180°.

**9.** Composant de dérivation optique selon la revendication 2, dans lequel l'épaisseur de phase de chacun desdits deux coupleurs directionnels est comprise entre 135° et 180° et dans lequel le retard de phase, 2θ, entre les deux guides d'ondes et entre lesdits deux coupleurs directionnels, est défini par 0° < θ < 90°.

**10.** Composant de dérivation optique selon l'une quelconque des revendications précédentes, dans lequel le niveau de la RBE (Relative Birefringence Error pour Erreur de Biréfringence Relative) de chacun desdits deux coupleurs directionnels est inférieur à 1 %.

**11.** Composant de dérivation optique selon l'une quelconque des revendications précédentes, dans lequel le niveau de la RBE de chacun desdits deux coupleurs directionnels n'est pas supérieur à 0,5 %.

**12.** Composant de dérivation optique selon l'une quelconque des revendications précédentes, dans lequel le composant est un dispositif de dérivation ayant un rapport de dérivation non supérieur à 4 %.

**13.** Composant de dérivation optique selon l'une quelconque des revendications précédentes, dans lequel le composant est un dispositif de dérivation dans lequel la variation du rapport de dérivation avec la longueur d'onde est inférieure à 0,1 % dans la région de longueurs d'onde de fonctionnement du composant.

**14.** Composant de dérivation optique selon la revendication 1, comprenant en outre au moins un guide d'ondes supplémentaire.

**15.** Composant de dérivation optique selon la revendication 1, comprenant en outre un moyen chauffant disposé sur au moins l'un desdits guides d'ondes.

**16.** Composant de dérivation optique selon l'une quelconque des revendications 1 à 15, dans lequel les guides d'ondes sont réalisés par la technique de silice sur silicium.

**17.** Dispositif de commutation optique comprenant deux composants de dérivation optique selon l'une quelconque des revendications 1 à 14, comprenant en outre au moins un moyen chauffant.

**18.** Dispositif de commutation optique selon la revendication 17, dans lequel les guides d'ondes sont réalisés par la technique de silice sur silicium.

Fig. 1

Fig. 2

Fig. 3

Fig. 4

Fig. 5

Fig. 6

Fig. 7

Fig. 8

PDL versus Wavelength for a 4% WINC Coupler
Gap = 1μm, RBE = 0.5%

Fig. 9

PDL versus Wavelength for a 4% WINC Coupler
Gap = 3μm, RBE = 4%

Fig. 10

Wavelength dependency of Tap Ratio
in PINC Power Tap Coupler

## Fig. 11

## Fig. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5044715 A

- US 5165001 A

**Non-patent literature cited in the description**

- Optical Integrated Circuits. Donelley & Sons company, 42, 60, 61